**Europäisches Patentamt**

**European Patent Office**

**Office européen des brevets**

(11) Veröffentlichungsnummer: **0 104 485**
**B1**

(12) **EUROPÄISCHE PATENTSCHRIFT**

(45) Veröffentlichungstag der Patentschrift:
24.02.88

(21) Anmeldenummer: **83108585.7**

(22) Anmeldetag: **31.08.83**

(51) Int. Cl.⁴: **H 04 B 1/74,** H 04 B 7/02, H 04 B 7/155

(54) **System zur Übertragung von Informationen.**

(30) Priorität: **02.09.82 DE 3232668**

(43) Veröffentlichungstag der Anmeldung:
**04.04.84 Patentblatt 84/14**

(45) Bekanntmachung des Hinweises auf die Patenterteilung:
**24.02.88 Patentblatt 88/8**

(84) Benannte Vertragsstaaten:
**AT CH DE LI NL**

(56) Entgegenhaltungen:
**AT-B-344 252**
**DE-A-1 466 359**
**DE-B-1 049 441**
**DE-C-2 152 721**
**US-A-3 393 365**

(73) Patentinhaber: **Siemens Aktiengesellschaft Berlin und München, Wittelsbacherplatz 2, D-8000 München 2 (DE)**

(72) Erfinder: **Vogel, Klaus, Dipl.- Ing., Kranzistrasse 15, D-8192 Geretsried/Gelting (DE)**

EP 0 104 485 B1

**Beschreibung**

Die Erfindung bezieht sich auf ein System zur Übertragung von Informationen auf elektrischem Wege mit hoher Sicherheit, insbesondere Richtfunksystem, bei dem mehrere Übertragungskanäle vorgesehen sind, sowie Überwachungs- und Umschalteinrichtungen, die bei Störungen in einem Übertragungskanal eine Ersatzschaltung veranlassen. Ein solches System ist beispielsweise durch die DE-C-2 152 721 bekannt.

Bei solchen Übertragungssystemen ist vorgesehen, daß einer bestimmten Anzahl von Übertragungskanälen jeweils ein oder mehrere Ersatzkanäle zum Austausch zugeordnet sind. Solche Ersatzkanäle erfordern eine zusätzliche Bandbreite, was wegen der zunehmenden Bandknappheit in Richtfunkbändern nicht erwünscht ist. Statt dessen soll der Heißersatz von Funkfeldern nunmehr mit einem elektronisch durchstimmbaren Heißersatzgerät erfolgen.

Der Erfindung liegt die Aufgabe zugrunde, den Ersatzschaltvorgang besonders zuverlässig und mit geringem Aufwand an Mikrowellenverbindungsleitungen und Schaltern vorzunehmen, sowie eine Schräglagenmitsteuerung des Laufzeitentzerrers im Ersatzgerät auf der Empfangsseite zu vermeiden.

Diese Aufgabe wird entsprechend einer ersten Ausführungsform nach der Erfindung gelöst durch einen im Betriebszustand befindlichen, mit einer Steuereinrichtung verbundenen Ersatzsender (Heißersatz), der über eine Richtungsleitung ohne Zwischenschaltung eines Kanalweichenfilters auf den Eingang einer die Richtungsleitungen für die Anschaltung der einzelnen Übertragungskanäle enthaltenden Sendekanalweiche anschaltbar ist, und durch in den einzelnen Übertragungskanälen angeordnete, durch die Steuereinrichtung steuerbare Kurzschluß- oder Unterbrechungselemente, die bei Anschaltung des Ersatzsenders den gestörten Sender abschalten und zudem eine Absorbierung der gleichfrequenten Heißersatzsignals in diesem Kanalweichenfilter verhindern, und ferner durch eine kanalweichenfilterfreie Auf- und Abschaltung eines empfangsseitig vorgesehenen Heißersatzempfängers.

Bei einer zweiten Ausführungsform gemäß der Erfindung ist ein in Betriebszustand befindlicher, mit einer Steuereinrichtung verbundener Ersatzsender (Heißersatz) vorgesehen, der über ein Summationsnetzwerk ohne Zwischenschaltung eines Kanalweichenfilters am Ende der Sendekanalweiche auf den Sendeweg aufschaltbar ist, und ferner eine kanalfilterfreie Auf- und Abschaltung eines empfangsseitig vorgesehenen Heißersatzempfängers.

Vorteilhafte Ausgestaltungen und Weiterbildungen des Anmeldungsgegenstandes sind in den Unteransprüchen angegeben.

Nachstehend wird die Erfindung anhand zweier in der Zeichnung dargestellter Ausführungsbeispiele näher erläutert.

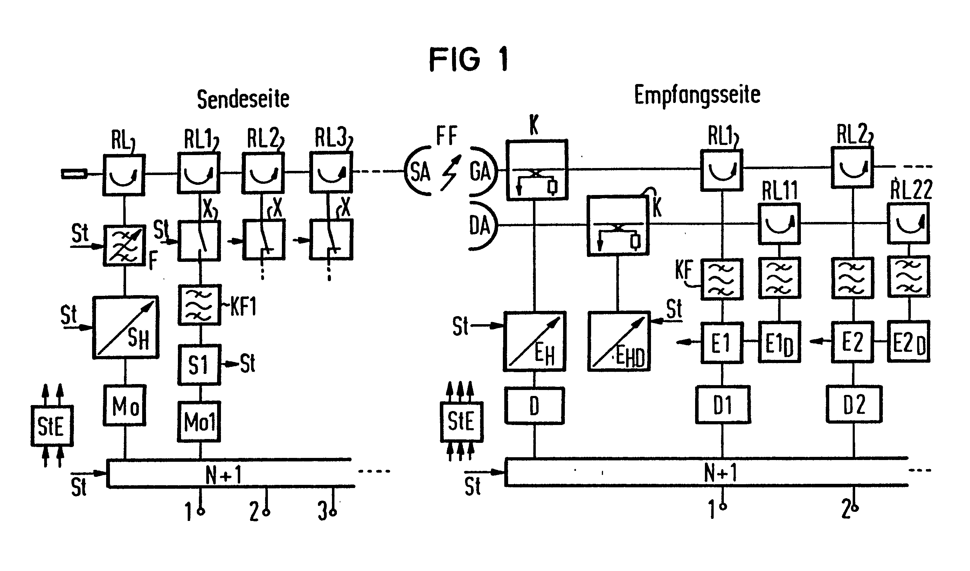

Fig. 1 zeigt einen N + 1-Heißersatz mit durchstimmbären Sendern und Empfängern hoher Linearität sowie filterfreier Leistungsaddition vor der Kanalweiche. Auf der Sendeseite sind die einzelnen, mit der N + 1-Ersatzschalteinrichtung verbundenen Übertragungskanäle an die einzelnen Richtungsleitungen RL1, RL2, RL3... der an die Sendeantenne SA angeschlossenen Sendekanalweiche angeschaltet. Die einzelnen Übertragungskanäle enthalten jeweils einen Modulator Mo1..., einen Sender S1..., ein Kanalweichenfilter KF1... und ein Kurzschluß- oder Unterbrechungselement X, das mit der jeweiligen Richtungsleitung RL1, RL2, RL3... verbunden ist. Ferner ist ein einen Heißersatzsender $S_H$ enthaltender Zweig vorgesehen, dem ein Modulator Mo vorgeschaltet ist und der über eine Richtungsleitung RL auf den Eingang der Sendekanalweiche geschaltet ist. Ein dem Heißersatzsender $S_H$ nachgeschaltetes gesteuertes Filter F ist vorgesehen zur Unterdrückung des sendeseitigen Restträgers. Die Sendeseite enthält ferner eine Steuereinrichtung StE, die Steuersignale der einzelnen Sender S1... der Übertragungskanäle erhält und deren ausgangsseitige Steuersignale St die N + 1-Ersatzschalteinrichtung, den Heißersatzsender $S_H$, das Filter F sowie die Kurzschluß- oder Unterbrechungselemente X der einzelnen Übertragungskanäle ansteuern. Bei Ausfall des Senders eines Übertragungskanals wird mit entsprechender Steuerung dieser Übertragungskanal abgeschaltet und der Heißersatzsender nach Abstimmung auf die entsprechende Frequenz auf die Sendekanalweiche aufgeschaltet.

Sende- und Empfangsseite sind über ein Funkfeld FF miteinander verbunden. Beim dargestellten Übertragungssystem für den Diversity-Betrieb sind empfangsseitig eine Antenne GA für das Grundsignal und eine zweite Antenne DA für das Diversity-Signal vorgesehen. Entsprechend ist jeder Übertragungskanal der Empfangsseite mit den Empfangseinrichtungen für das Grundsignal und das Diversity-Signal ausgestattet. Die Empfangszweige, denen die Empfangssignale über Richtungsleitunugen RL1... und RL11... zugeführt werden, enthalten jeweils ein Kanalweichenfilter KF und einen Empfänger E1... für das Grundsignal bzw. einen Diversity-Empfänger $E1_D$... und einen Demodulator D1..., der mit der N + 1-Ersatzschalteinrichtung verbunden ist. Die Heißersatzempfangssignale werden schalter- und filterfrei am Eingang der Empfangskanalweiche über Koppler K entnommen und dem Heißersatzempfänger $E_H$ für das Grundsignal bzw. dem Heißersatzempfänger $E_{HD}$ für das Diversity-Signal zugeführt. Die über einen in der Figur nicht dargestellten Kombinator miteinander verbundenen Heißersatzempfänger sind über

2

einen Demodulator an die N+1-Ersatzschalteinrichtung angeschlossen. Je nach Wahl des Kopplungsfaktors können hierbei Systemwertverluste im Heißersatzkanal oder den anderen Kanälen auftreten. Eine Steuereinheit StE steuert auch empfangsseitig das Heißersatzsystem auf die richtige RF-Frequenz sowie die N+1-Ersatzschalteinrichtung im Basisband. Die steuernden Signale St stammen von den ersatzzuschaltenden Empfängern E1... bzw. E1$_D$....

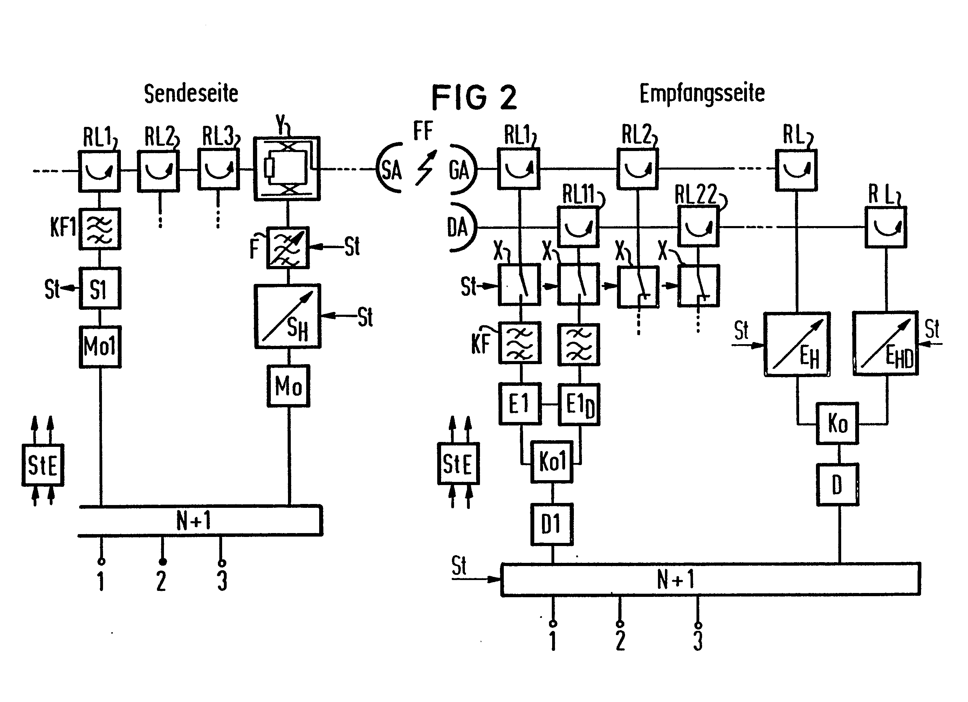

Fig. 2 zeigt einen N+1-Heißersatz mit durchstimmbaren Sendern und Empfängern hoher Linearität sowie filterfreier Leistungsaddition nach der Kanalweiche. Auf der Sendeseite entsprechen die einzelnen Übertragungskanäle in ihrem Aufbau im wesentlichen denen der Ausführungsform nach Fig. 1, enthalten jedoch im Unterschied zu diesen keine Kurzschluß- oder Unterbrechungselemente. Der Heißersatzsender S$_H$ mit vorgeschaltetem Modulator Mo und nachgeschaltetem gesteuertem Filter F ist über ein Summationsnetzwerk Y kanalfilterfrei und quasi verlustfrei nach der Sendekanalweiche in den Sendeweg eingekoppelt. Die Steuerung der einzelnen Elemente erfolgt hierbei ebenfalls über die Steuereinheit StE.

Auf der Empfangsseite erfolgt bei dieser Ausführungsform die Auskopplung der Empfangssignale für den Grund- und Diversity-Empfänger E$_H$ bzw. E$_{HD}$ für den Heißersatz über Richtungsleitungen RL ohne Kanalweichenfilter nach der Empfangskanalweiche. Dadurch tritt hierbei kein zusätzlicher Systemwertverlust auf. Unterschiedlich zur Ausführungsform nach Fig. 1 ist in den einzelnen Übertragungskanälen der Empfangsseite vor dem Kanalweichenfilter jeweils ein durch die Steuereinrichtung StE gesteuertes Kurzschluß- oder Unterbrechungselement eingeschaltet, um einen Signalverlust für das Heißersatzgerät in den entsprechenden gleichfrequenten Filtern zu verhindern. Die übrigen Schaltungselemente entsprechen denen der Ausführungsform nach Fig. 1 und sind mit jeweils gleichen Bezugszeichen versehen.

Es sind auch Variationen der vorstehend beschriebenen Ausführungsformen zur filterfreien Auf- und Abschaltung der Heißersatzsender und -empfänger auf die Kanalweiche möglich, derart, daß ein Sender der in Fig. 1 beschriebenen Art mit einem Empfänger nach Fig. 2 zusammenarbeitet und ein Sender entsprechend Fig. 2 mit einem Empfänger nach Fig. 1.

Den beiden dargestellten Ausführungsformen ist gemeinsam, daß die RF-Kanalweichenselektion der normalen Kanäle beim Heißersatz-Sender/Empfänger nun in der ZF- oder Basisbandebene vorgenommen werden muß, um die Funktionen der Spektrumsbegrenzung und Nachbarkanalentkopplung zu übernehmen. Diese Störungen lassen sich dadurch sicher vermeiden, daß Sender und Empfänger hochlinear ausgelegt werden.

**Patentansprüche**

1. System zur Übertragung von Informationen auf elektrischem Wege mit hoher Sicherheit, insbesondere Richtfunksystem, bei dem mehrere Übertragungskanäle vorgesehen sind, sowie Überwachungs- und Umschalteinrichtungen, die bei Störungen in einem Übertragungskanal eine Ersatzschaltung veranlassen, gekennzeichnet durch einen im Betriebszustand befindlichen, mit einer Steuereinrichtung (StE) verbundenen Ersatzsender (Heißersatz) (S$_H$), der über eine Richtungsleitung (RL) ohne Zwischenschaltung eines Kanalweichenfilters auf den Eingang einer die Richtungsleitungen für die Anschaltung der einzelnen Übertragungskanäle enthaltenden Sendekanalweiche aufschaltbar ist, und durch in den einzelnen Übertragungskanälen angeordnete, durch die Steuereinrichtung (StE) steuerbare Kurzschluß- oder Unterbrechungselemente (X), die bei Anschaltung des Ersatzsenders den gestörten Sender (S) abschalten und zudem eine Absorbierung des gleichfrequenten Heißersatzsignals in diesem Kanalweichenfilter (KF) verhindern, und ferner durch eine kanalweichenfilterfreie Auf- und Abschaltung eines empfangsseitig vorgesehenen Heißersatzempfängers (E$_H$).

2. System zur Übertragung von Informationen auf elektrischem Wege mit hoher Sicherheit, insbesondere Richtfunksystem, bei dem mehrere Übertragungskanäle vorgesehen sind, sowie Überwachungs- und Umschalteinrichtungen, die bei Störungen in einem Übertragungskanal eine Ersatzschaltung veranlassen, gekennzeichnet durch einen im Betriebszustand befindlichen, mit einer Steuereinrichtung verbundenen Ersatzsender (Heißersatz) (S$_H$), der über ein Summationsnetzwerk (Y) ohne Zwischenschaltung eines Kanalweichenfilters am Ende der Sendekanalweiche auf den Sendeweg aufschaltbar ist, und durch eine kanalweichenfilterfreie Auf- und Abschaltung eines empfangsseitig vorgesehenen Heißersatzempfängers (E$_H$).

3. System nach Anspruch 1 oder 2, dadurch gekennzeichnet, daß empfangsseitig die Heißersatz-Empfangssignale ohne Kanalweichenfilter ausgekoppelt werden und daß in den einzelnen Übertragungskanälen vor dem Kanalweichenfilter (KF) jeweils ein durch die Steuereinrichtung (StE) gesteuertes Kurzschluß- oder Unterbrechungselement (X) angeordnet ist.

4. System nach Anspruch 1 oder 2, dadurch gekennzeichnet, daß empfangsseitig die Heißersatz-Empfangssignale schalter- und kanalweichenfilterfrei am Eingang der Empfangskanalweiche über einen Koppler (K) entnommen werden.

5. System nach einem der Ansprüche 1 bis 4, <u>dadurch gekennzeichnet</u>, daß sendeseitig im Leitungsweg des Heißersatzsenders ($S_H$) ein gesteuertes Filter (F) eingeschaltet ist.

6. System nach einem der Ansprüche 1 bis 5, <u>gekennzeichnet durch</u> seine Ausbildung als Diversity-System, bei dem empfangsseitig die Empfangssignale für einen Grund (G)- und einen Diversity (D)-Empfänger jeweils in gleicher Weise ausgekoppelt werden.

## Claims

1. A system for electrically transmitting information with a high level of security, in particular a radio relay system, wherein a plurality of transmission channels are provided, and monitoring- and switch-over devices which, in the event of disturbances in a transmission channel, initiate a stand-by connection, <u>characterised by</u> a stand-by transmitter (hot stand-by) ($S_H$) which is in the operating state, is connected to a control device (StE) and which can be connected via a routing line (RL), without the interposition of a channel separating filter, to the input of a transmitting channel separating filter which includes the routing lines for the connection of the individual transmission channels, further characterised by short-circuiting or interrupting elements (X) which are arranged in the individual transmission channels, can be controlled by the control device (StE) and which disconnect the disturbed transmitter (S) when the stand-by transmitter is connected and additionally prevent the absorption of the same-frequency hot stand-by signal in this channel separating filter (KF), and further characterised by the connection and disconnection, without the use of a channel separating filter, of a hot stand-by receiver ($E_H$) which is arranged at the receiving end.

2. A system for the electrical transmission of information with a high level of security, in particular a radio relay system, wherein a plurality of transmission channels are provided, and monitoring and switch-over devices which, in the event of disturbances in a transmission channel, initiate a stand-by connection, <u>characterised by</u> a stand-by transmitter (hot stand-by) ($S_H$) which is in the operating state, is connected to a control device, and which can be connected into the transmitting path via an addition network (Y), without the interposition of a channel separating filter, at the end of the transmitting channel separating filter and characterised by the connection and disconnection, without the use of channel separating filters, of a hot stand-by receiver ($E_H$) arranged at the receiving end.

3. A system as claimed in claim 1 or claim 2, <u>characterised in</u> that at the receiving end the hot stand-by received signals are output-coupled without the use of channel separating filters, and that in the individual transmission channels the respective channel separating filter (KF) is in each case preceded by a short-circuiting or interrupting element (X) which is controlled by the control device (StE).

4. A system as claimed in claim 1 or claim 2, <u>characterised in</u> that at the receiving end the hot stand-by received signals are output-coupled, without the use of switches and channel separating filters, at the input of the receiving channel separating filter via a coupler (K).

5. A system as claimed in one of the claims 1 to 4, <u>characterised in</u> that at the transmitting end, a controlled filter (F) is connected into the path of the hot stand-by transmitter ($S_H$).

6. A system as claimed in one of the claims 1 to 5, <u>characterised by</u> its design as a diversity system, wherein at the receiving end the received signals are in each case decoupled in the same manner for a fundamental receiver (6) and a diversity receiver (D).

## Revendications

1. Système pour la transmission électrique d'informations avec une grande sécurité, notamment système de radiodiffusion par faisceau hertzien, dans lequel il est prévu plusieurs canaux de transmission ainsi que des dispositifs de contrôle et de commutation qui déclenchent un branchement de remplacement dans le cas de perturbations dans un canal de transmission, caractérisé par un émetteur de remplacement (émetteur de remplacement à chaud) ($S_H$), qui se trouve dans l'état prêt à fonctionner et est relié à un dispositif de commande (StE) et peut être raccordé, par l'intermédiaire d'une ligne directionnelle (RL), sans montage intercalé d'un filtre d'aiguillage de canaux, à l'entrée d'un aiguillage de canaux d'émission contenant une ligne directionnelle pour le raccordement des différents canaux de transmission, et par des éléments de court-circuit ou d'interruption (X), qui sont disposés dans les différents canaux de transmission, peuvent être commandés par le dispositif de commande (StE), débranchent l'émetteur perturbé (S) lors du raccordement de l'émetteur de remplacement et empêchent en outre une absorption du signal de même fréquence de l'émetteur de remplacement à chaud, dans ce filtre d'aiguillage de canaux (KF), et en outre par un branchement et un débranchement, sans filtre d'aiguillage de canaux, d'un récepteur de remplacement à chaud ($E_H$) prévu sur le côté réception.

2. Système pour la transmission électrique d'informations avec une grande sécurité, notamment système de radiodiffusion par faisceau hertzien, dans lequel il est prévu plusieurs canaux de transmission ainsi que des dispositifs de contrôle et de commutation qui déclenchent un branchement de remplacement dans le cas de perturbations dans un canal de transmission, caractérisé par un émetteur de remplacement (émetteur de remplacement à chaud) ($S_H$) qui se trouve dans l'état prêt à fonctionner, est relié à un dispositif de commande, peut être branché dans la voie d'émission par l'intermédiaire d'un réseau additionneur (Y) sans le montage intercalé d'un filtre d'aiguillage de canaux à l'extrémité de l'aiguillage de canaux d'émission, et par un branchement et un débranchement, sans filtre d'aiguillage de canaux, d'un récepteur de remplacement à chaud ($E_H$) prévu sur le côté réception.

3. Système suivant la revendication 1 ou 2, caractérisé par le fait que, côté réception, les signaux de réception du récepteur de remplacement à chaud sont découplés sans filtre d'aiguillage de canaux et que dans les différents canaux de transmission, un élément respectif de court-circuit ou d'interruption (X), qui est commandé par le dispositif de commande (StE), est disposé en amont du filtre d'aiguillage de canaux (KF).

4. Système suivant la revendication 1 ou 2, caractérisé par le fait que, côté réception, les signaux de réception du récepteur de remplacement à chaud sont découplés par l'intermédiaire d'un coupleur (K), sans commutateur et sans filtre d'aiguillage de canaux, à l'entrée de l'aiguillage de canaux de réception.

5. Système suivant l'une des revendications 1 à 4, caractérisé par le fait que, côté émission, un filtre commandé (F) est branché dans la ligne de raccordement de l'émetteur de remplacement à chaud ($S_H$).

6. Système suivant l'une des revendications 1 à 5, caractérisé par sa réalisation sous la forme d'un système fonctionnant en diversité, dans lequel, côté émission, les signaux de réception pour un récepteur de base (6) et pour un récepteur fonctionnant en diversité (D) sont découplés respectivement de la même manière.

FIG 1

Empfangsseite

Sendeseite

FIG 2